# EUROPÄISCHE PATENTSCHRIFT

(11) **EP 2 006 193 B1**
(45) Veröffentlichungstag und Bekanntmachung des Hinweises auf die Patenterteilung: **13.04.2016**
(21) Anmeldenummer: 08003424.2
(22) Anmeldetag: 26.02.2008
(51) Int. Cl.: B62D 35/00, B62D 37/02

(54) **HECKDECKEL MIT MONTAGEMODUL**
BOOT LID WITH MOUNTING MODULE
OUVRANT ARRIÈRE DOTÉ D'UN MODULE DE MONTAGE

(30) Priorität: 20.06.2007 DE 102007028163
(43) Veröffentlichungstag der Anmeldung: 24.12.2008
(73) Patentinhaber: Dr. Ing. h.c. F. Porsche AG, 70435 Stuttgart (DE)
(72) Erfinder: Fröschle, Mathias, 73760 Ostfildern (DE); Schulzki, Markus, 71638 Ludwigsburg (DE)

(56) Entgegenhaltungen:
- EP-A- 1 840 015
- DE-A1- 3 615 584
- DE-C1- 19 652 692

## Beschreibung

Die vorliegende Erfindung betrifft einen Heckdeckel zum Verschließen eines Heckraums eines Personenkraftwagens, mit den Merkmalen des Oberbegriffs des Anspruchs 1,

Aus der EP 1 840 015 A1 ist eine solche Luftleiteinrichtung für ein Fahrzeug bekannt, die in einem Heckbereich des Fahrzeugs angeordnet ist und mindestens ein mittleres Hauptluftleitelement umfasst, welches von einer eingefahrenen Ruhestellung in eine ausgefahrene Betriebsstellung verlagerbar ist, wobei seitliche Zusatzluftleitelemente zusammen mit dem oder jedem mittleren Hauptluftleitelement verlagerbar sind.

Aus der EP 0 250 716 B1 ist ein Heckdeckel bekannt, der einen Deckelkörper In Schalenbauweise mit einer dem zu verschließenden Heckraum zugewandten Innenschale und einer vom Heckraum abgewandten Außenschale, welche die Innenschale vollständig verdeckt beziehungsweise verblendet, Der Deckelkörper enthält eine allseitig eingefasst Aussparung, in der eine Luftleltvorrichtung angeordnet Ist. Diese ist am Deckelkörper zwischen einer Ruhestellung und einer Betriebsstellung verstellbar angebracht. Ferner ist eine Verstelleinrichtung zum Verstellen der Luftleltvorrichtung vorgesehen, die über einen Hilfsrahmen an der Innenschale und somit am Deckelkörper angebracht Ist. Die Herstellung eines Fahrzeugs, das einen Heckraum und einen solchen Heckdeckel aufweist, kann beispielsweise so durchgeführt werden, dass zunächst der Deckelkörper, also die Innenschale und die daran befestigte Außenschale über Scharniere an der Fahrzeugkarosserie befestigt werden. Anschließend wird die Karosserie zusammen mit daran angebrachtem Deckelkörper lackiert. Nach dem Lackieren werden am Deckelkörper die übrigen Komponenten des Heckdeckels angebracht, also insbesondere die Luftleitvorrichtung und die Verstelleinrichtung sowie gegebenenfalls ein Gebläse und ein Schließbügel.

Die DE 361 558 4 A bezieht sich auf ein Kraftfahrzeug, insbesondere einen Personenwagen, mit einem Kühler und einer im Heckbereich angeordneten Luftleitvorrichtung, wobei mittels eines Gebläses des Heckmotors Kühlluft angesaugt wird und durch Lufteintrittsöffnungen der Luftieitvorrichtung zu einem darunterllegenden Kühler strömt.

Die vorliegende Erfindung beschäftigt sich mit dem Problem, für einen Heckdeckel beziehungsweise für die Herstellung eines damit ausgestatteten Kraftfahrzeugs eine verbesserte Ausführungsform anzugeben, die sich insbesondere durch eine vereinfachte Herstellbarkeit auszeichnet.

Dieses Problem wird erfindungsgemäß durch die Gegenstände der unabhängigen Ansprüche gelöst, Vorteilhafte Ausführungsformen sind Gegenstand der abhängigen Ansprüche.

Die Erfindung beruht auf dem allgemeinen Gedanken, den Heckdeckel mit einem selbsttragenden Montageträger auszustatten, an dem alle übrigen Komponenten des Heckdeckels montiert werden. Hierdurch kann eine vormontierbare Einheit gebildet werden, was die Herstellung des mit dem Heckdeckel ausgestatteten Fahrzeugs vereinfacht. Insbesondere kann die so vormontierte Einheit an der bereits lackierten Karosserie montiert werden. Um hierbei den optischen Eindruck des Heckdeckels besser an die lackierte Karosserie anpassen zu können, erstreckt sich zum einen die Luftleitvorrichtung über die gesamte quer zur Fahrzeuglängsrichtung gemessene Breite des Heckdeckels. Somit verdeckt die Luftleitvorrichtung den Montageträger an dessen Außenseite über die gesamte Breite, so dass eine Lackierung des Montageträgers nicht erforderlich ist. Der übrige Bereich der Außenseite des Montageträgers ist dabei durch eine Blendvorrichtung verdeckt, die sich ebenfalls über die Gesamtbreite des Heckdeckels erstreckt.

Diese Bauweise hat eine weitere Vereinfachung der Montage zur Folge, da die Luftleitvorrichtung im montierten Zustand nur gegenüber der Fahrzeugkarosserie ausgerichtet werden muss, um die gewünschten Spaltmaße herzustellen. Bei dem weiter oben beschriebenen bekannten Heckdeckel muss einerseits die Luftleitvorrichtung gegenüber dem Deckelkörper ausgerichtet werden. Andererseits muss zusätzlich der Deckelkörper gegenüber der Fahrzeugkarosserie ausgerichtet werden, um die gewünschten Spaltmaße zu erzielen.

Gemäß einer besonders vorteilhaften Ausführungsform kann die Blendvorrichtung einen am Montageträger befestigten Blendenträger sowie zumindest einen Blendenkörper aufweisen, der an einer vom Montageträger abgewandten Außenseite des Blendenträgers befestigt ist. Durch die Verwendung unterschiedlicher Blendenkörper lassen sich somit verschiedene Varianten für die Blendvorrichtung realisieren. Der Blendenträger bleibt dabei gleich, wodurch die Teilevielfalt reduziert und die Kosten für die Variantenbildung gesenkt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch und perspektivisch,
- Fig. 1: eine Ansicht eines Heckdeckels,
- Fig. 2: eine Ansicht des Heckdeckels ohne Luftleitvorrichtung,
- Fig. 3: eine Ansicht der Luftleitvorrichtung,
- Fig. 4: eine Ansicht des Heckdeckels mit herausgezogener, vergrößerter Blendvorrichtung,
- Fig. 5: eine Ansicht wie in Fig. 4, jedoch bei einer anderen Ausführungsform der Blendvorrichtung,
- Fig. 6: eine Ansicht eines Blendenträgers der Blendvorrichtung,
- Fig. 7: eine Ansicht eines Blendenkörpers für die in Fig. 4 gezeigte Blendvorrichtung,
- Fig. 8 und 9: Ansichten von Blendkörpern für die in Fig. 5 gezeigte Blendvorrichtung,
- Fig. 10: eine Ansicht wie in Fig. 2,
- Fig. 11: eine Ansicht eines Montageträgers,
- Fig. 12: eine Ansicht einer Blendvorrichtung,
- Fig. 13: eine Ansicht eines Gebläses,
- Fig. 14: eine Ansicht einer Verstelleinrichtung.

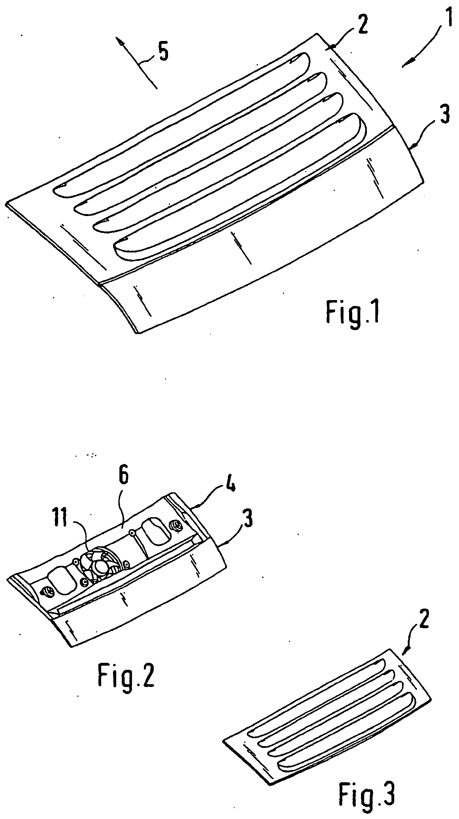

Entsprechend den Fig. 1 bis 3 umfasst ein Heckdeckel 1, mit dessen Hilfe ein hier nicht gezeigter Heckraum eines Personenkraftwagens, insbesondere eines Sportwagens, verschließbar ist, eine Luftleitvorrichtung 2, eine Blendvorrichtung 3 und einen in Fig. 2 erkennbaren Montageträger 4. Der Montageträger 4 bildet quasi eine Innenseite des Heckdeckels 1, die im montierten Zustand des Heckdeckels 1 dem zu verschließenden Heckraum zugewandt ist. Im Unterschied dazu bilden die Luftleitvorrichtung 2 und die Blendvorrichtung 3 eine Außenseite des Heckdeckels 1, die im montierten Zustand von besagtem Heckraum abgewandt ist. Erkennbar erstrecken sich die Luftleitvorrichtung 2 und die Blendvorrichtung 3 jeweils über die gesamte Breite des Heckdeckels 1, die quer zu einer durch einen Pfeil symbolisch in Fig. 1 dargestellten Fahrzeuglängsrichtung 5 gemessen ist. Ferner ist die Blendvorrichtung 3 heckseitig, also bezüglich der Fahrtrichtung des Fahrzeugs nach hinten benachbart zur Luftleitvorrichtung 2 am Montageträger 4 angeordnet. Die Blendvorrichtung 3 kann jedoch auch vor der Luftleitvorrichtung 2 angeordnet sein.

Der Montageträger 4 ist im montierten Zustand am Fahrzeug schwenkverstellbar angebracht. Hierzu sind am Montageträger 4 hier nicht näher dargestellte Scharniere angebracht. Der Montageträger 4 weist eine Außenseite 6 auf, die im montierten Zustand vom Heckraum abgewandt ist und die in den Fig. 2, 10 und 11 dem Betrachter zugewandt ist. Der Montageträger 4 kann als Gussbauteil hergestellt sein. Beispielsweise kann es sich hierbei um ein Druckgussteil aus einer Leichtmetalllegierung handeln, vorzugsweise aus einer Alu- oder Magnesiumlegierung. Ebenso kann der Montageträger 4 als Kunststoff-Spritzgussbauteil oder als gepresstes Bauteil ausgestaltet sein. Des Weiteren ist es möglich, den Montageträger 4 als Blechformteil auszugestalten, bevorzugt aus einem Leichtmetallblech.

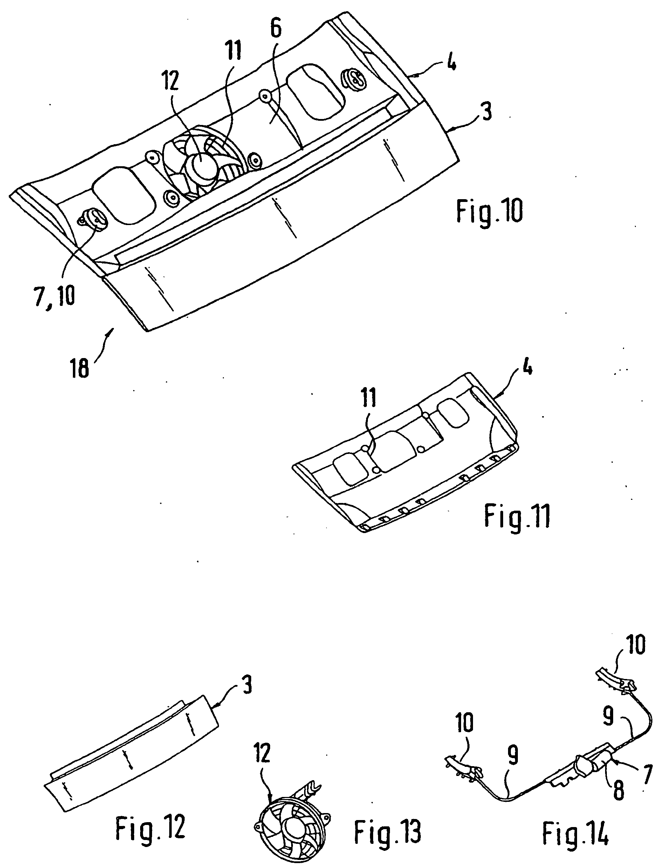

Die Luftleitvorrichtung 2 ist an der Außenseite 6 des Montageträgers 4 angeordnet, und zwar so, dass sie zwischen einer in den Fig.1, 4 und 5 gezeigten Ruhestellung und einer Betriebsstellung verstellbar ist. In der Ruhestellung ist die Luftleitvorrichtung 2 in die Kontur des Heckdeckels 1 und bei verschlossenem Heckdeckel 1 in die Kontur der Fahrzeugkarosserie integriert. In der Betriebsstellung ist die Luftleitvorrichtung 2 ausgestellt. Beispielsweise erstreckt sich die Luftleitvorrichtung 2 in ihrer Betriebsstellung bei verschlossenem Heckdeckel 1 am Fahrzeug im Wesentlichen horizontal. Die Luftleitvorrichtung 2 bildet in ihrer Betriebsstellung einen Spoiler. Um die Luftleitvorrichtung 2 zwischen der Ruhestellung und der Betriebsstellung verstellen zu können, ist eine in Fig. 14 dargestellte Verstelleinrichtung 7 vorgesehen, die ebenfalls am Montageträger 4 angebracht ist. Diese Verstelleinrichtung 7 kann beispielsweise einen Verstellantrieb 8 aufweisen, der über geeignete Verbindungselemente 9, wie zum Beispiel Bowdenzüge oder flexible Drehwellen, mit Stellgliedern 10 gekoppelt ist, mit denen die Luftleitvorrichtung 2 fest verbunden ist.

Die Luftleitvorrichtung 2 besitzt in üblicher Weise nicht näher bezeichnete Lufteinlassöffnungen, um Luft durch die Luftleitvorrichtung 2 und durch den Heckdeckel 1 in den Heckraum einbringen zu können, in dem beispielsweise ein Antriebsaggregat des Personenkraftwagens angeordnet sein kann. In diesem Fall weist der Montageträger 4 zumindest eine Durchgangsöffnung 11 auf. Im gezeigten Beispiel besitzt der Montageträger 4 zumindest drei größere Durchgangsöffnungen 11. Ferner ist am Montageträger 4 hier ein Gebläse 12 befestigt, das die gewünschte Luftzirkulation ermöglicht. Das Gebläse 12 ist dabei unmittelbar am Montageträger 4 befestigt und ist dabei an einer den Heckraum zugewandten Innenseite des Montageträgers 4 angeordnet.

Da sich sowohl die Luftleitvorrichtung 2 als auch die Blendvorrichtung 3 über die gesamte Breite des Montageträgers 4 erstrecken, ist.dieser zumindest in der Ruhestellung der Luftleitvorrichtung 2 an seiner Außenseite 6 vollständig durch die Luftleitvorrichtung 2 und durch die Blendvorrichtung 3 verdeckt. Eine an die Karosseriefarbe angepasste Lackierung des Montageträgers 4 ist somit nicht erforderlich.

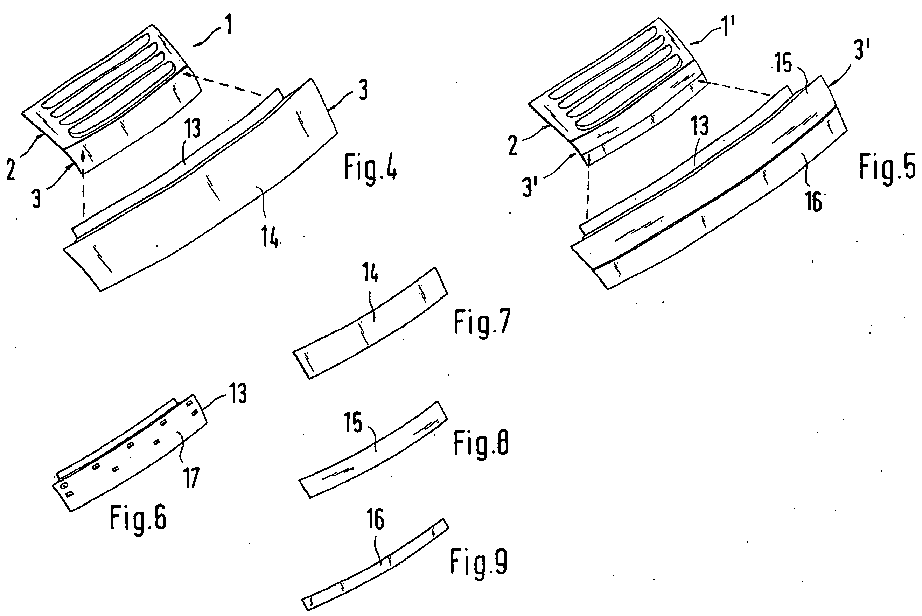

Die Blendvorrichtung 3 ist so ausgestaltet, dass sie möglichst einfach in mehreren Varianten herstellbar ist, um auch für den Heckdeckel 1 unterschiedliche Varianten realisieren zu können. Dementsprechend zeigt Fig. 4 die bereits in den Fig. 1 bis 3 gezeigte Variante für den Heckdeckel 1 und für die Blendvorrichtung 3, während Fig. 5 eine andere Ausführungsform für den Heckdeckel 1, der im Folgenden mit 1' bezeichnet wird, und für die Blendvorrichtung 3 zeigt, die im Folgenden mit 3' bezeichnet wird. Entsprechend den Fig. 3 bis 9 umfasst die Blendvorrichtung 3 beziehungsweise 3' einen Blendenträger 13, der am Montageträger 4, und zwar an dessen Außenseite 6 befestigt ist. Ferner umfasst die Blendvorrichtung 3 beziehungsweise 3' zumindest einen Blendenkörper 14 beziehungsweise 15 und 16. Bei der in Fig. 4 gezeigten Ausführungsform ist nur ein Blendenkörper 14 vorgesehen. Im Unterschied dazu zeigt die in Fig. 5 wiedergegebene Ausführungsform zwei Blendenkörper 15 und 16. Der jeweilige Blendenkörper 14, 15, 16 ist am Blendenträger 13 an einer vom Montageträger 4 abgewandten Außenseite 17 befestigt.

Fig. 7 zeigt den einen Blendenkörper 14, der zur Realisierung der in Fig. 4 gezeigten Ausführungsform verwendet wird. Der dabei verwendete einzige Blendenkörper 14 erstreckt sich über die gesamte Breite des Heckdeckels 1 und verblendet dadurch den gesamten Blendenträger 13 sowie den der Blendvorrichtung 3 zugeordneten Abschnitt des Montageträgers 4.

Die in Fig. 5 gezeigte Variante besitzt genau zwei Blendenkörper 15, 16. Es ist klar, dass grundsätzlich auch drei oder mehr Blendenkörper vorgesehen sein können. Die beiden Blendenkörper 15, 16 erstrecken sich dabei jeweils über die gesamte Breite der Heckklappe 1 und sind dementsprechend in der Fahrzeuglängsrichtung 5 zueinander benachbart angeordnet. Fig. 8 zeigt den im montierten Zustand direkt an die Luftleitvorrichtung 2 angrenzenden Blendenkörper 15, während Fig. 9 den entfernt von der Luftleitvorrichtung 2 angeordneten Blendenkörper 16 zeigt. Bei Letzterem kann es sich beispielsweise um ein Leuchtband handeln, das beispielsweise reflektierend ausgestaltet ist.

Die Blendenkörper 10, 15, 16 können ebenso wie der Blendenträger 13 aus Kunststoff hergestellt sein. Auch die Luftleitvorrichtung 2 kann aus Kunststoff hergestellt sein.

Fig. 10 zeigt ebenso wie Fig. 2 den Montageträger 4 in einem vormontierten Zustand bei fehlender Luftleitvorrichtung 2. In diesem Montagezustand bildet der Montageträger 4 zusammen mit den daran angebrachten Komponenten eine vormontierte Einheit 18, die komplett an der Fahrzeugkarosserie montierbar ist. Zur Herstellung dieser Einheit 18 wird der Montageträger 4 gemäß Fig. 11 mit den einzelnen Komponenten bestückt, die exemplarisch in den Fig. 12 bis 14 wiedergegeben sind. Somit wird der Montageträger 4 gemäß Fig. 11 mit der in Fig. 12 gezeigten Blendvorrichtung 3 versehen, die ihrerseits eine vormontierbare Einheit bilden kann. Ferner kann das Gebläse 12 gemäß Fig. 13 am Montageträger 4 befestigt werden. Des Weiteren kann die in Fig. 14 gezeigte Verstelleinrichtung 7 am Montageträger 4 angebracht werden. Darüber hinaus kann am Montageträger 4 ein hier nicht gezeigter Schließbügel angebracht werden, mit dem die Heckklappe 1 in der Schließstellung an der Fahrzeugkarosserie verriegelbar ist. Außerdem können am Montageträger 4 die bereits weiter oben erwähnten Scharniere angebracht werden, mit denen die Heckklappe 1 an der Fahrzeugkarosserie verschwenkbar gelagert ist.

Bei Verwendung der hier vorgestellten Heckklappe 1 kann das damit auszustattende Fahrzeug bevorzugt wie folgt hergestellt werden. Zunächst wird die Einheit 18 vormontiert, die im Wesentlichen die komplette Heckklappe 1 ohne die Luftleitvorrichtung 2 umfasst. Diese vormontierte Einheit 18 wird anschließend am bereits vorher lackierten Fahrzeug beziehungsweise an der vorab lackierten Karosserie des Fahrzeugs montiert. Anschließend wird die Luftleitvorrichtung 2 an dem bereits am Fahrzeug montierten Montageträger 4 montiert.

Ebenso ist es möglich, die Luftleitvorrichtung 2 an der Einheit 18 vorzumontieren und dann den kompletten Heckdeckel am lackierten Fahrzeug zu montieren.

Eine Lackierung der Heckklappe 1 beziehungsweise eines Teils der Heckklappe 1 zusammen mit der Fahrzeugkarosserie ist nicht erforderlich. Es ist klar, dass die die Außenseite der Heckklappe 1 bildenden Komponenten der Heckklappe, also die Luftleitvorrichtung 2 und die Blendvorrichtung 3 beziehungsweise wenigstens einer der Blendenkörper 14 beziehungsweise 15 ebenfalls in der Wagenfarbe lackiert sein kann.

## Patentansprüche

1. Heckdeckel (1) zum Verschließen eines Heckraums eines Personenkraftwagens, der im montierten Zustand am Fahrzeug angebracht ist und sich aus einem Innenteil und einem Außenteil zusammensetzt, wobei der Heckdeckel (1) eine zwischen einer Ruhestellung und einer Betriebsstellung verlagerbare Luftleitvorrichtung (2) umfasst, die mit einer Verstelleinrichtung (7) zusammenwirkt, wobei das Innenteil des Heckdeckels (1) durch einen selbsttragenden Montageträger (4) gebildet wird, an dem zumindest die Verstelleinrichtung (7) der Luftleitvorrichtung (2) befestigt ist, wobei das Außenteil des Heckdeckels (1) durch die Luftleitvorrichtung (2) und eine Blendvorrichtung (3) gebildet wird, wobei sich die Luftleitvorrichtung (2) und die Blendvorrichtung (3) jeweils über die gesamte, quer zur Fahrzeuglängsrichtung (5) gemessene Breite des Heckdeckels (1) erstrecken wobei der Montageträger (4) zumindest in der Ruhestellung der Luftleitvorrichtung (2) an seiner Außenseite (6) vollständig durch die Luftleitvorrichtung (2) und durch die Blendvorrichtung (3) verdeckt ist, **dadurch gekennzeichnet, dass** die Blendvorrichtung (3) einen außen am Montageträger (4) befestigten Blendenträger (13) sowie zumindest einen Blendenkörper (14, 15, 16) aufweist, der an einer vom Montageträger (4) abgewandten Außenseite (17) des Blendenträgers (13) befestigt ist.

2. Heckdeckel nach Anspruch 1, **dadurch gekennzeichnet,**
- **dass** die Außenseite (17) des Blendenträgers (13) von einem einzigen Blendenkörper (14) verdeckt ist, oder
- **dass** die Außenseite (17) des Blendenträgers (13) von zumindest zwei Blendenkörpern (15, 16) verdeckt ist, die in der Fahrzeuglängsrichtung (5) aneinander angrenzen.

3. Heckdeckel nach Anspruch 1 oder 2, **dadurch gekennzeichnet, dass** zumindest einer der Blendenkörper (16) als Leuchtband ausgestaltet ist.

4. Heckdeckel nach einem der Ansprüche 1 bis 3, **dadurch gekennzeichnet, dass** sich der jeweilige Blendenkörper (14, 15, 16) über die ganze Breite des Heckdeckels (1) erstreckt.

5. Heckdeckel nach einem der Ansprüche 1 bis 4, **dadurch gekennzeichnet,**
- **dass** am Montageträger (4) die Verstelleinrichtung (7) unmittelbar befestigt ist, und/oder
- **dass** am Montageträger (4) ein Gebläse (12) unmittelbar befestigt ist, und/oder
- **dass** am Montageträger (4) ein Schließbügel unmittelbar befestigt ist, und/oder
- **dass** am Montageträger (4) Scharniere unmittelbar befestigt sind.

6. Heckdeckel nach einem der vorangegangenen Ansprüche, **dadurch gekennzeichnet, dass** der Montageträger (4) durch ein einstückiges Druckgussteil aus einer Leichtmetalllegierung, z.B. eine Alu- oder Magnesiumlegierung, gebildet wird.

7. Verfahren zum Herstellen eines Personenkraftwagens mit einer Heckklappe (1) nach einem der Ansprüche 1 bis 6,
- bei dem am Montageträger (4) zumindest die Verstelleinrichtung (7) vormontiert wird,
- bei dem der vormontierte Montageträger (4) an einer bereits zuvor lackierten Karosserie des Fahrzeugs montiert wird,
- bei dem die Luftleitvorrichtung (2) am an der Karosserie montierten Montageträger (4) montiert wird.

8. Verfahren nach Anspruch 7, **dadurch gekennzeichnet,**
**dass** bei der Vormontage des Montageträgers (4) zumindest eine der folgenden Komponenten am Montageträger (4) montiert wird: Blendvorrichtung (3), Blendenträger (13), Blendenkörper (14, 15, 16), Gebläse (12), Schließbügel, Scharnier.

## Claims

1. Rear lid (1) for closing a rear compartment of a passenger vehicle, said rear lid, when fitted, being attached to the vehicle and being composed of an inner part and an outer part, wherein the rear lid (1) comprises a spoiler device (2) which can be displaced between an inoperative position and an operative position and interacts with an adjustment means (7), wherein the inner part of the rear lid (1) is formed by a self-supporting assembly carrier (4) to which at least the adjustment means (7) of the spoiler device (2) is fastened, and in that the outer part of the rear lid (1) is formed by the spoiler device (2) and a panel device (3), wherein the spoiler device (2) and the panel device (3) each extend over the entire width of the rear lid (1), as measured transversely with respect to the longitudinal direction (5) of the vehicle, and, in that, at least in the inoperative position of the spoiler device (2), the assembly carrier (4) is completely concealed on the outer side (6) thereof by the spoiler device (2) and by the panel device (3), **characterized in that** the panel device (3) has a panel carrier (13) which is fastened to the outside of the assembly carrier (4), and at least one panel body (14, 15, 16) which is fastened to an outer side (17) of the panel carrier (13), which outer side faces away from the assembly carrier (4).

2. Rear lid according to Claim 2, **characterized**
- **in that** the outer side (17) of the panel carrier (13) is covered by a single panel body (14), or
- **in that** the outer side (17) of the panel carrier (13) is covered by at least two panel bodies (15, 16) which are adjacent to each other in the longitudinal direction (5) of the vehicle.

3. Rear lid according to Claim 2 or 3, **characterized in that** at least one of the panel bodies (16) is configured as a luminous band.

4. Rear lid according to one of Claims 2 to 4, **characterized in that** the respective panel body (14, 15, 16) extends over the entire width of the rear lid (1).

5. Rear lid according to one of Claims 1 to 4, **characterized**
- **in that** the adjustment means (7) is directly fastened to the assembly carrier (4), and/or
- **in that** a fan (12) is directly fastened to the assembly carrier (4), and/or
- **in that** a locking clamp is directly fastened to the assembly carrier (4), and/or
- **in that** hinges are directly fastened to the assembly carrier (4).

6. Rear lid according to one of the preceding claims, **characterized in that** the assembly carrier (4) is formed by a single-piece diecast part made from a light metal alloy, for example an aluminum or magnesium alloy.

7. Method for producing a passenger vehicle with a tailgate (1) according to one of Claims 1 to 7,
- in which at least the adjustment means (7) is preassembled on the assembly carrier (4),
- in which the preassembled assembly carrier (4) is fitted to a vehicle body which has already been painted previously,
- in which the spoiler device (2) is fitted to the assembly carrier (4) which is fitted to the vehicle body.

8. Method according to Claim 8, **characterized in that**, during the preassembly of the assembly carrier (4), at least one of the following components is fitted to the assembly carrier (4): panel device (3), panel carrier (13), panel bodies (14, 15, 16), fan (12), locking clamp and hinges.

## Revendications

1. Ouvrant arrière (1) pour la fermeture d'un espace arrière d'une automobile, qui est attaché au véhicule dans l'état monté et qui se compose d'une partie intérieure et d'une partie extérieure, l'ouvrant arrière (1) comprenant un dispositif de guidage d'air (2) pouvant être déplacé entre une position de repos et une position fonctionnelle, lequel coopère avec un dispositif de réglage (7), la partie intérieure de l'ouvrant arrière (1) étant formée par un support de montage autoporteur (4) sur lequel est fixé au moins le dispositif de réglage (7) du dispositif de guidage d'air (2), et en ce que la partie extérieure de l'ouvrant arrière (1) est formée par le dispositif de guidage d'air (2) et un dispositif de garniture (3), le dispositif de guidage d'air (2) et le dispositif de garniture (3) s'étendant à chaque fois sur toute la largeur de l'ouvrant arrière (1), dimensionnée transversalement à la direction longitudinale du véhicule (5), et en ce que le support de montage (4), au moins dans la position de repos du dispositif de guidage d'air (2), est complètement recouvert au niveau de son côté extérieur (6) par le dispositif de guidage d'air (2) et par le dispositif de garniture (3), **caractérisé en ce que** le dispositif de garniture (3) présente un support de garniture (13) fixé à l'extérieur au support de montage (4) ainsi qu'au moins un corps de garniture (14, 15, 16) qui est fixé au niveau d'un côté extérieur (17) du support de garniture (13) opposé au support de montage (4).

2. Ouvrant arrière selon la revendication 2, **caractérisé en ce que**
- le côté extérieur (17) du support de garniture (13) est recouvert par un corps de garniture unique (14), ou
- le côté extérieur (17) du support de garniture (13) est recouvert par au moins deux corps de garniture (15, 16) qui sont adjacents l'un à l'autre dans la direction longitudinale du véhicule (5).

3. Ouvrant arrière selon la revendication 2 ou 3, **caractérisé en ce qu'**au moins l'un des corps de garniture (16) est configuré sous forme de bandeau lumineux.

4. Ouvrant arrière selon l'une quelconque des revendications 2 à 4, **caractérisé en ce que** le corps de garniture respectif (14, 15, 16) s'étend sur toute la largeur de l'ouvrant arrière (1).

5. Ouvrant arrière selon l'une quelconque des revendications 1 à 4, **caractérisé en ce que**
- le dispositif de réglage (7) est directement fixé au support de montage (4) et/ou
- une soufflante (12) est directement fixée au support de montage (4), et/ou
- un étrier de fermeture est directement fixé au support de montage (4), et/ou
- des charnières sont directement fixées au support de montage (4).

6. Ouvrant arrière selon l'une quelconque des revendications précédentes, **caractérisé en ce que** le support de montage (4) est formé par une partie moulée sous pression d'une seule pièce constituée d'un alliage en métal léger, par exemple d'un alliage d'aluminium ou de magnésium.

7. Procédé de fabrication d'une automobile comprenant un ouvrant arrière (1) selon l'une quelconque des revendications 1 à 7, dans lequel
- au moins le dispositif de réglage (7) est prémonté sur le support de montage (4),
- le support de montage prémonté (4) est monté sur une carrosserie du véhicule déjà préalablement laquée, et
- le dispositif de guidage d'air (2) est monté sur le support de montage (4) monté sur la carrosserie.

8. Procédé selon la revendication 8, **caractérisé en ce que** lors du montage du support de montage (4), au moins l'un des composants suivants est monté sur le support de montage (4) : un dispositif de garniture (3), un support de garniture (13), des corps de garniture (14, 15, 16), une soufflante (12), un étrier de fermeture, une charnière.
